# EUROPEAN PATENT SPECIFICATION

(11) **EP 3 267 633 B1**
(45) Date of publication and mention of the grant of the patent: **25.12.2019**
(21) Application number: 16758635.3
(22) Date of filing: 02.03.2016
(51) Int. Cl.: H04L 12/46, H04L 12/70, H04L 29/12

(54) **INFORMATION PROCESSING SYSTEM, PROXY SERVER, ADDRESS DUPLICATION PREVENTION METHOD, AND COMPUTER-READABLE RECORDING MEDIUM**
INFORMATIONSVERARBEITUNGSSYSTEM, PROXY-SERVER, VERFAHREN ZUR VERHINDERUNG VON ADRESSENDUPLIKATION UND COMPUTERLESBARES AUFZEICHNUNGSMEDIUM
SYSTÈME DE TRAITEMENT D'INFORMATIONS, SERVEUR MANDATAIRE, PROCÉDÉ DE PRÉVENTION DE DUPLICATION D'ADRESSE, ET SUPPORT D'ENREGISTREMENT LISIBLE PAR ORDINATEUR

(30) Priority: 02.03.2015 JP 2015040088
(43) Date of publication of application: 10.01.2018
(73) Proprietor: NEC Corporation, Tokyo 108-8001 (JP)
(72) Inventor: MATSUMOTO, Takehiko, Tokyo 108-8001 (JP)
(74) Representative: Betten & Resch
(86) International application number: PCT/JP2016/001117
(87) International publication number: WO 2016/139937

(56) References cited:
- JP-A- 2006 050 006
- US-A1- 2012 011 230
- US-A1- 2013 166 737
- DROMS R: "RFC 2131 - Request For Comments, Dynamic Host Configuration Protocol", NETWORK WORKING GROUP REQUEST FOR COMMENTS, XX, XX, 1 March 1997 (1997-03-01), pages 1-45, XP002198362,
- R. DROMS: 'Dynamic Host Configuration Protocol' RFC 2131 01 March 1997, pages 1 - 46, XP015007915 Retrieved from the Internet: <URL:HTTPS://TOOLS.IETF.ORG/PDF/RFC2131.PDF > [retrieved on 2016-03-23]

## Description

### [Technical Field]

The present invention relates to an information processing system, a proxy server, an address duplication prevention method, and a program for causing a computer to execute the method that dynamically allocates an IP (Internet Protocol) address in response to a request from a terminal.

### [Background Art]

A unique IP address is allocated to each terminal connected to a network. In a case where a network administrator allocates an IP address to each terminal, when a number of network terminals becomes large, management of IP addresses becomes more complicated. Accordingly, a server dynamically allocates an IP address by using DHCP (Dynamic Host Configuration Protocol) to thereby manage the IP addresses.

A method for dynamically allocating an IP address is described in "3.1 Client-server interaction-allocating a network address" in RFC2131 (referred to as NPL 1) distributed by IETF (Internet Engineering Task Force). The method will be briefly described.

First, in order to confirm whether or not an IP address to be allocated to a client terminal is already used, a DHCP server transmits an ICMP (Internet Control Message Protocol) echo request by addressing the IP address to be allocated as a destination. The DHCP server determines whether or not the specified IP address is used based on whether there is an ICMP echo response from any one of client terminals.

In this manner, the DHCP server confirms a use state of an IP address by using ICMP so as not to allocate the IP address already used, thereby preventing duplicate allocation of the same IP address to a plurality of client terminals. A case where IPv6 (Internet Protocol Version 6) is used as a protocol is specified in RFC3315 (referred to as NPL 2).

PTL 1 discloses a method in which a DHCP relay agent is provided between subnets of a network to which a plurality of subnets are connected through routers, and thereby one DHCP server manages IP addresses.

On the other hand, PTL 2 discloses that a plurality of DHCP servers are located in a network in order to enhance reliability in allocating an IP address. However, following to the method disclosed in PTL 2, it is necessary to manage information on IP addresses allocated among the DHCP servers to be matched in such a way that the same IP address is not allocated by a plurality of DHCP servers.

### [Citation List]

### [Patent Literature]

[PTL 1] Japanese Unexamined Patent Application Publication No. 2005-210554
[PTL 2] Japanese Unexamined Patent Application Publication No. 2006-254153

### [Non Patent Literature]

[NPL 1] RFC2131, IETF, March, 1997
[NPL 2] RFC3315, IETF, July, 2003

US 2012/011230 A2 discloses a gateway that may be utilized to assign Internet protocol (IP) addresses to client devices in a shared subnet. The gateway may include a dynamic host protocol configuration (DHCP) proxy server. The proxy server may receive discover messages from the client devices. The proxy server may send proxy discover messages to a master DHCP server and receive offer messages containing IP addresses and local options. The proxy server may add/modify the local options to create proxy offer messages, send the proxy offer messages to the client devices and receive IP address request messages from the client devices. The proxy server may send proxy IP address request messages to the master DHCP server and receive acknowledgement messages. The proxy server may add/modify local options in the acknowledgement messages to create proxy acknowledgement messages and send the proxy acknowledgement messages to the client devices to assign the IP addresses and the local options

JP-2006-050006 A provides a network connection setting technology capable of attaining transparent utilization of a plurality of local networks as if to be one and same network by utilizing Internet phones each having a gateway function to apply connection setting to a plurality of the local networks by way of the Internet. The network connection setting method applies the connection setting via the Internet to the first local network provided with the first gateway apparatus having an IP phone function and the second local network provided with the second gateway apparatus having an IP phone function generates a tunnel for connecting the first and second gateway apparatuses during a speech between the first and second gateway apparatuses, compares a first local address in the first local network with a second local address in the second local network to discriminate the presence of duplication, and sets a bridge for interconnecting the first and second local networks when no duplication exists between the first and second local addresses on the basis of a result of the discrimination.

US 2013/166737 A1 discloses techniques for detecting duplicate IP addresses at a DHCP relay agent. Embodiments identify a list of DHCP clients that have valid IP address leases from one or more DHCP servers. Additionally, network traffic from a first node passing through the DHCP relay agent is monitored. Embodiments then determine whether the first node is using a duplicate IP address, based on the monitored network traffic and the identified list of DHCP clients.

### [Summary of Invention]

### [Technical Problem]

Depending on a network configuration and schema, a network between a DHCP server and a client terminal may not have IP reachability. In other words, a predetermined communication via the network may not be performed. In that case, an ICMP echo request does not reach the client terminal from the DHCP server. For example, communication using ICMP may be blocked by a firewall installed in a communication device such as a router, which relays communication between a subnet to which the DHCP server is connected and a subnet to which the client terminal is connected.

When the ICMP echo request does not reach the client terminal from the DHCP server, the DHCP server cannot confirm a use state of an IP address. In this case, the DHCP server cannot confirm whether or not there is duplicate allocation of an IP address. The DHCP server may duplicatedly allocate the same IP address to a plurality of client terminals within the same subnet.

The present invention has been made to solve the problems in the above-mentioned techniques, and a primary object of the present invention is to provide an information processing system, a proxy server, an address duplication prevention method, and a program for causing a computer to execute the method, that are capable of preventing duplicate allocation of an IP address.

### [Solution to Problem]

The present invention is defined in the independent claims. The dependent claims define embodiments of the invention.

### [Advantageous Effects of Invention]

According to the present invention, it is possible for a DHCP server to confirm whether or not an IP address is used, even in a network in which a path on which the DHCP server and a client terminal communicate with each other using a DHCP has no IP reachability, and it is also possible to prevent duplicate allocation of an IP address.

### [Brief Description of Drawings]

Fig. 1 is a diagram illustrating a configuration example of a network according to a first example embodiment.
Fig. 2 is a functional block diagram illustrating a configuration example of a DHCP server illustrated in Fig. 1.
Fig. 3 is a functional block diagram illustrating a configuration example of a DHCP proxy server illustrated in Fig. 1.
Fig. 4 is a diagram illustrating a request message to be transmitted from the DHCP server to the DHCP proxy server.
Fig. 5 is a diagram illustrating an example of a response message to be transmitted from the DHCP proxy server to the DHCP server.
Fig. 6 is a flowchart illustrating an operation procedure in an information processing system according to the first example embodiment.
Fig. 7 is a diagram illustrating a configuration example of a network according to a second example embodiment.
Fig. 8 is a diagram illustrating an example of a computer that implements a system according to each example embodiment of the present invention.

### [Description of Embodiments]

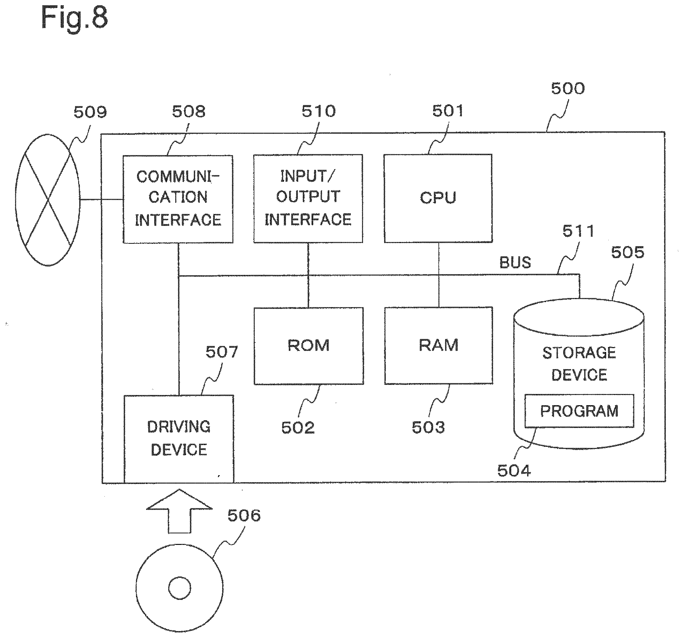

Example embodiments of the present invention will be described with reference to the drawings. In each example embodiment of the present invention, each component in each system indicates a functional block. Some or all of the components in each system are implemented by any combination of, for example, a computer 500 and a program as illustrated in Fig. 8. The computer 500 includes, as an example, the following components.
- A CPU (Central Processing Unit) 501
- A ROM (Read Only Memory) 502
- A RAM (Random Access Memory) 503
- A program 504 that is loaded into the RAM 503
- A storage device 505 that stores the program 504
- A driving device 507 that reads from a recording medium 506 or writes to the recording medium
- A communication interface 508 that is connected to a communication network 509
- An input/output interface 510 that inputs or outputs data
- A bus 511 that connects components to one another

Each component of each device in each example embodiment is implemented in such a manner that the CPU 501 acquires the program 504 for implementing these functions and executes the program. The program 504 for implementing a function of each component of each device is preliminarily stored in, for example, the storage device 505 or the RAM 503, and is read out, as needed, by the CPU 501. Note that the program 504 may be supplied to the CPU 501 via the communication network 509, or may be preliminarily stored in the recording medium 506, and the program may be read out by the driving device 507 and supplied to the CPU 501.

A way for implementing each device includes various modified examples. For example, each device may be implemented by any combination of a different information processing device 500 and a different program, for each component. A plurality of components included in each device may be implemented by any combination of a single information processing device 500 and a program.

Some or all of the components of each device are also implemented by a general-purpose or dedicated circuitry, a processor, and the like, or a combination thereof. These may be composed of a single chip, or may be composed of a plurality of chips connected through a bus. Some or all of the components of each device may be implemented by a combination of the above-mentioned circuitry or the like and the program.

### (First Example Embodiment)

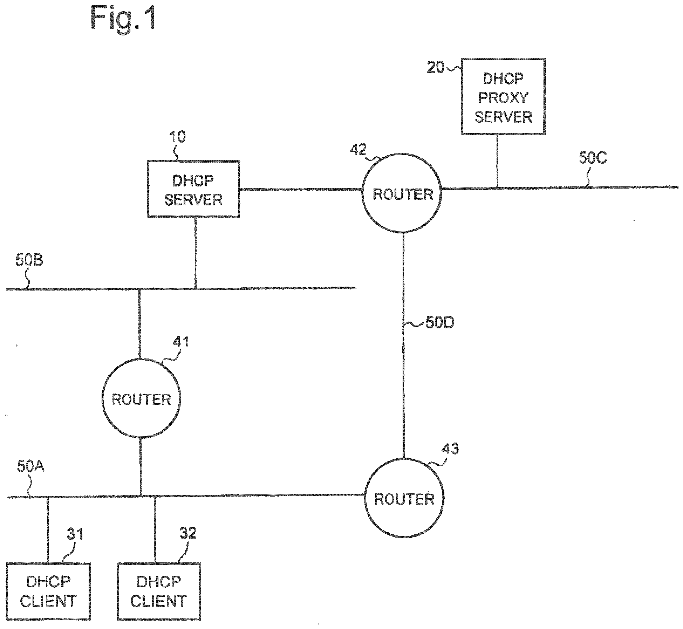

A configuration of a network including an information processing system according to the present example embodiment will be described. Fig. 1 is a block diagram illustrating a configuration example of the network including the information processing system according to the present example embodiment.

The network illustrated in Fig. 1 includes subnets 50A to 50D. The subnet 50A is connected to the subnet 50B via a router 41, and is also connected to the subnet 50D via a router 43. The subnet 50D is connected to the subnet 50C via a router 42. A DHCP server 10 is connected to the subnet 50B. A DHCP proxy server 20 is connected to the subnet 50C.

The information processing system according to the present example embodiment includes the DHCP server 10 and the DHCP proxy server 20.

The DHCP server 10 is connected to the subnet 50A via the subnet 50B and the router 41, and is also connected to the subnet 50C via the router 42. DHCP client terminals (hereinafter simply referred to as "client terminals") 31 and 32 are connected to the subnet 50A. The DHCP server 10 is a server that distributes network configuration information to the client terminals 31 and 32.

The client terminals 31 and 32 are terminals that request the DHCP server 10 to send network configuration information by using DHCP, and acquire the network configuration information from the DHCP server 10. The network configuration information includes a subnet mask as well as an IP address. The IP address includes a network address that is different for each subnet, and a host address that is an address different for each terminal.

The DHCP proxy server 20 receives, from the DHCP server 10, a request for confirming a use state of the IP address, and confirms whether or not the IP address to be confirmed is used, on behalf of the DHCP server 10.

The routers 41 to 43 relay communication between subnets. The router 41 includes a function of a DHCP relay agent, as well as typical functions as a router. Accordingly, the request for allocating an IP address and the allocation of an IP address in response to the request are performed through the router 41.

Note that the present example embodiment illustrates a case where four subnets, three routers, and two client terminals are used, for ease of explanation. However, the number of subnets, the number of routers, and the number of client terminals are not limited to these numbers.

The configuration of the DHCP server 10 in the information processing system according to the present example embodiment will be described.

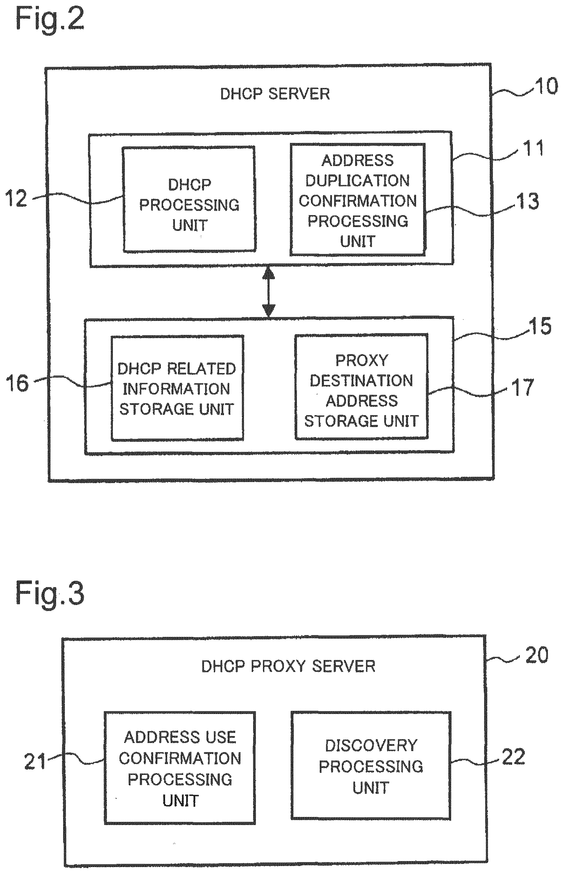

Fig. 2 is a functional block diagram illustrating a configuration example of the DHCP server illustrated in Fig. 1. As illustrated in Fig. 2, the DHCP server 10 includes an information processing unit 11 and a storage unit 15. The DHCP server 10 is implemented by the above-mentioned computer 500 and the like. Specifically, the information processing unit 11 includes a memory (not illustrated) that stores a program and a CPU (Central Processing Unit) (not illustrated) that executes processes in accordance with the program.

The storage unit 15 includes a DHCP related information storage unit 16 and a proxy destination address storage unit 17. The information processing unit 11 includes a DHCP processing unit 12 and an address duplication confirmation processing unit 13. The CPU executes the program, thereby virtually constructing the DHCP processing unit 12 and the address duplication confirmation processing unit 13 in the DHCP server 10.

The DHCP processing unit 12 and the DHCP related information storage unit 16 correspond to configurations provided in a typical DHCP server. The address duplication confirmation processing unit 13 and the proxy destination address storage unit 17 are configurations added to the DHCP server according to the present example embodiment.

The DHCP related information storage unit 16 stores information held by typical DHCPv4 and DHCPv6 servers. The DHCP related information storage unit 16 stores information on the use state of the generated IP address. The information on the use state of the IP address indicates one of states of "in use", "unused", and "unusable", of the generated IP address. The DHCP related information storage unit 16 manages the IP address allocated by the DHCP processing unit 12, as "in use".

The proxy destination address storage unit 17 stores the IP address of the DHCP proxy server 20. The present example embodiment assumes a case where the IP address of the DHCP proxy server 20 is stored in the proxy destination address storage unit 17 in advance. A means used for the proxy destination address storage unit 17 to store the IP address of the DHCP proxy server 20 is not particularly limited.

The DHCP processing unit 12 distributes IPv4 (Internet Protocol Version 4)/IPv6 network configuration information to client terminals and manages the network configuration information. The DHCP processing unit 12 includes functions of typical DHCPv4 and DHCPv6 servers, and executes standard processes of protocol disclosed in NPL 1, NPL 2, and other literature. When a request for IP address allocation is sent from a client terminal, the DHCP processing unit 12 refers to the DHCP related information storage unit 16, and selects an unused IP address or generates a new IP address. When the IP address is not used after confirming the use state, the DHCP processing unit 12 allocates the IP address. When the IP address is used after confirming the use state, the DHCP processing unit selects or generates another IP address.

The address duplication confirmation processing unit 13 confirms the actual use state of the IP address selected or generated by the DHCP processing unit 12. The address duplication confirmation processing unit 13 includes a function of transmitting a request message, and a function of receiving a response message from the DHCP proxy server 20. The request message is a message for requesting the DHCP proxy server 20 to confirm the use state of the IP address. The address duplication confirmation processing unit 13 determines whether or not to actually allocate the IP address, the use state of which has been confirmed, to the client terminal, depending on the confirmation result indicating the use state of the IP address. The response message received from the DHCP proxy server 20 includes the confirmation result indicating the use state of the IP address.

Herein, configuration examples of the request message for confirming a use state of an IP address and the response message including the confirmation result will be described.

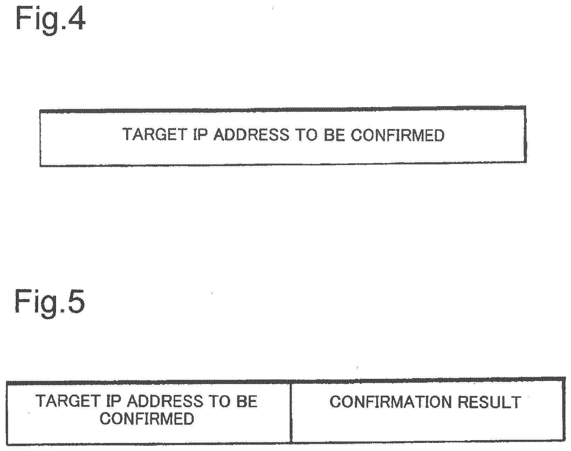

Fig. 4 is a diagram illustrating an example of the request message for requesting confirmation of the use state of the IP address. The request message is transmitted from the DHCP server to the DHCP proxy server. Fig. 5 is a diagram illustrating an example of the response message including the confirmation result indicating the use state of the IP address. The response message is transmitted from the DHCP proxy server to the DHCP server.

In the request message illustrated in Fig. 4, the target IP address, the use state of which is to be confirmed, i.e., the IP address determined by the DHCP server 10, is described in the field "TARGET IP ADDRESS TO BE CONFIRMED".

In the response message illustrated in Fig. 5, the IP address, the use state of which is confirmed, i.e., the IP address specified in the request message by the DHCP server 10, is described in the field "TARGET IP ADDRESS TO BE CONFIRMED". The confirmation result indicating the use state of the IP address, confirmed by the DHCP proxy server 20, is described in the field "CONFIRMATION RESULT". Specifically, a value indicating information on "in use" or "unused" is described in the field "CONFIRMATION RESULT".

Next, the configuration of the DHCP proxy server 20 will be described.

Fig. 3 is a functional block diagram illustrating a configuration example of the DHCP proxy server illustrated in Fig. 1. As illustrated in Fig. 3, the DHCP proxy server 20 includes an address use confirmation processing unit 21 and a discovery processing unit 22.

In the DHCP proxy server 20, a memory (not illustrated) that stores a program and a CPU (not illustrated) that executes processes in accordance with the program, are provided. Specifically, the DHCP proxy server 20 is implemented by the computer 500 illustrated in Fig. 8, or other devices. The CPU executes the program, thereby virtually constructing the address use confirmation processing unit 21 and the discovery processing unit 22 in the DHCP proxy server 20.

The address use confirmation processing unit 21 receives a request message from the DHCP server 10, and transmits a response message including the confirmation result to the DHCP server 10. The request message is a message indicating a request for confirming the use state of the specified IP address. Note that the messages to be transmitted or received by the address use confirmation processing unit 21 have been described above with reference to Figs. 4 and 5, and thus detailed descriptions thereof are omitted.

The discovery processing unit 22 confirms the use state of the specified IP address, and returns the result. The discovery processing unit 22 specifies the address included in the request message as a destination and transmits an echo request to the subnet to which the client terminal that has requested to allocate the IP address is connected. The echo request is a request for a terminal to change a destination of a received message and send a reply. The discovery processing unit 22 notifies the address use confirmation processing unit 21 of presence or absence of an echo response. The echo response is a response to the echo request.

As a method for confirming a use state of an IP address, a method using ICMP is described in the present example embodiment, and a method using ARP (Address Resolution Protocol) is described in a second example embodiment. However, the method for confirming a use state of an IP address is not limited to the methods using these communication protocols. While an example in which the IPv4 protocol is used will be described below, the present example embodiment can also be applied to a case where the IPv6 protocol is used.

In the case of using ICMP, the discovery processing unit 22 transmits an ICMP echo request by using the specified IP address as a destination. When an ICMP echo response is received, the discovery processing unit 22 determines that the IP address is used. When the ICMP echo response is not received, the discovery processing unit 22 determines that the IP address is not used. The discovery processing unit 22 notifies the address use confirmation processing unit 21 of presence or absence of the ICMP echo response as the confirmation result.

Next, an operation of an address duplication prevention method by the information processing system according to the present example embodiment will be described. Fig. 4 is a flowchart illustrating an operation procedure of the system according to the present example embodiment.

In this example, it is assumed that there is no IP reachability between the subnet 50A and the subnet 50B for communication using ICMP. For example, a firewall that blocks communication using ICMP may be set for the router 41. In addition, it is assumed that the client terminal 31 requests the DHCP server 10 to allocate an IP address.

Step F01: The client terminal 31 sends a request for allocation of an IP address by using DHCP. A procedure of the protocol of DHCP is based on NPL1, which is a standard technology, and a detailed description thereof is omitted herein. A DHCP relay agent function executed by the router 41 transfers the request message of allocation of an IP address from the client terminal 31 to the DHCP server 10 located on the subnet 50B.

Step F11: When the DHCP server 10 receives a request for allocation of an IP address from the client terminal 31, the DHCP processing unit 12 selects an unused IP address by referring to the DHCP related information storage unit 16.

Step F12: The DHCP processing unit 12 requests the address duplication confirmation processing unit 13 to confirm the use state of the IP address selected in the step F11.

Step F13: The address duplication confirmation processing unit 13 refers to the proxy destination address storage unit 17 and specifies the IP address of the DHCP proxy server 20. Subsequently, the address duplication confirmation processing unit 13 transmits, to the DHCP proxy server 20, a message for requesting confirmation as to whether or not the IP address selected by the DHCP processing unit 12 is used.

Step F21: When the DHCP proxy server 20 receives, from the DHCP server 10, a message for requesting confirmation of the use state of the specified IP address, the address use confirmation processing unit 21 requests the discovery processing unit 22 to confirm the use state of the specified IP address.

An operation of step F22 will be described. The discovery processing unit 22 sends the ICMP echo request to the subnet 50A by using the specified IP address as a destination. Specifically, the discovery processing unit 22 sends, to the subnet 50C, the ICMP echo request using, as a destination, the IP address in which the subnet 50A is set as a network address. The network address in the ICMP echo request is read out by the router 42, and is transferred to the router 43 via the subnet 50D. In the router 43, since the network address in the ICMP echo request is set to the subnet 50A, the router 43 sends the ICMP echo request to the subnet 50A. Thus, the ICMP echo request reaches the subnet 50A through the subnet 50C, the router 42, the subnet 50D, and the router 43.

When terminals connected to the subnet 50A include a client terminal to which the target IP address to be confirmed is provided, the ICMP echo response reaches the DHCP proxy server 20 through a reverse path to a path through which the ICMP echo request is transferred.

When the ICMP echo response is received, the discovery processing unit 22 determines that the specified IP address is used. When the ICMP echo response is not received, the discovery processing unit 22 determines that the specified IP address is not used. The discovery processing unit 22 notifies the address use confirmation processing unit 21 of presence or absence of the ICMP echo response as the confirmation result.

Step F23: The address use confirmation processing unit 21 generates a response message including the confirmation result indicating the use state of the specified IP address, and transmits the generated response message to the DHCP server 10.

Step F14: Upon receiving the response message including the confirmation result indicating the use state of the specified IP address, the address duplication confirmation processing unit 13 of the DHCP server 10 notifies the DHCP processing unit 12 of the confirmation result.

Step F15: Based on the confirmation result notified in the step F14, the DHCP processing unit 12 determines whether or not the target IP address is used.

Step F16: In the confirmation result notified in the step F14, when the target IP address is not used, the DHCP processing unit 12 allocates the IP address to the client terminal 31 in accordance with the protocol of DHCP.

Step F17: In the confirmation result notified in the step F14, when the target IP address is already used, the DHCP processing unit 12 returns to the step F11 and selects another IP address.

Step F02: The client terminal 31 receives allocation of the IP address via the router 41 in accordance with the protocol of DHCP.

According to the present example embodiment, even when the path through which the DHCP server and the client terminal communicate with each other by DHCP is a network having no IP reachability for ICMP, it is possible to prevent the DHCP server from duplicatedly allocating the same IP address to a plurality of client terminals. A reason for this will be briefly described. The DHCP server requests the proxy server, which is connected to a subnet being different from the subnet to which the DHCP server is connected, to confirm the use state by specifying an IP address. When the proxy server transmits the ICMP echo request using the specified IP address as a destination, since the proxy server is connected to a subnet being different from the subnet to which the DHCP server is connected, the ICMP echo request is transferred via a communication path other than a network having no IP reachability. Thus, the proxy server can confirm whether or not the target IP address to be confirmed is used in the subnet to which the client terminal that has sent the request for allocation of the IP address belongs. The DHCP server determines whether or not the target IP address is used, based on the confirmation result received from the proxy server, thereby enabling preventing duplicate allocation of the IP address.

### (Second Example Embodiment)

In the first example embodiment, the DHCP proxy server uses ICMP for the confirmation of the use state of the IP address, while in the present example embodiment, ARP is used instead of ICMP as a communication protocol.

Even when the network between the DHCP server and the client terminal has IP reachability, a client terminal that does not support ICMP sends no response to the ICMP echo request. Ascertainment of duplication of an IP address for such a client terminal cannot be performed, thus the same IP address may be duplicatedly allocated to a plurality of client terminals.

Accordingly, in the present example embodiment, ARP that is supported by a large number of client terminals is used for confirmation of a use state of an IP address.

A configuration of a network including the information processing system according to the present example embodiment will be described.

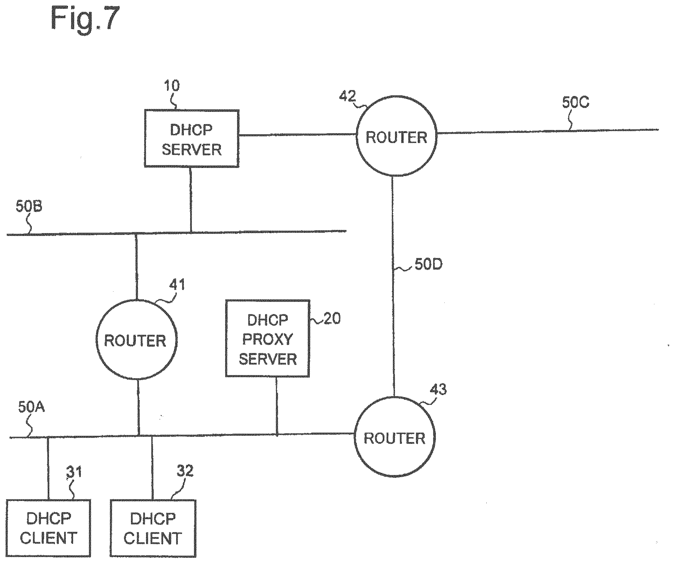

Fig. 7 is a block diagram illustrating a configuration example of the network including the information processing system according to the present example embodiment.

In the first example embodiment, the DHCP proxy server 20 is connected to the subnet 50C as illustrated in Fig. 1. In the present example embodiment, as illustrated in Fig. 7, the DHCP proxy server 20 is connected to the subnet 50A. In other words, the DHCP proxy server 20 and a client terminal which requests allocation of an IP address are located in the same subnet 50A.

In the present example embodiment, the discovery processing unit 22 of the DHCP proxy server 20 uses the specified IP address as a destination, and transmits an ARP request to the subnet 50A to which the client terminal which has requested allocation of the IP address is connected. When an ARP response is received, the discovery processing unit 22 determines that the IP address is used. When the ARP response is not received, the discovery processing unit 22 determines that the IP address is not used.

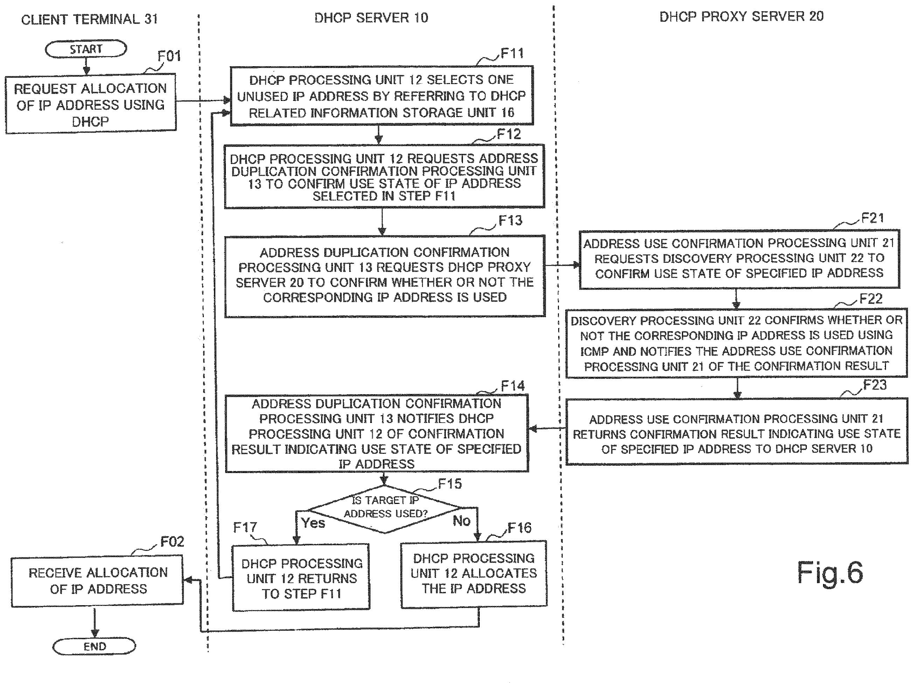

An operation of the information processing system according to the present example embodiment will be described with reference to Figs. 6 and 7.

According to the present example embodiment, in the step F22, which has been described above with reference to Fig. 6 of the first example embodiment, ARP can be used as a means for confirming a use state of an IP address. In the present example, the operation of the step F22 in the flowchart illustrated in Fig. 6 is replaced by an operation of step F22', which is described below, corresponding to the configuration described above with reference to Fig. 7.

Step F22': The discovery processing unit 22 of the DHCP proxy server 20 uses the specified IP address as a destination and transmits the ARP request to the subnet 50A. When the ARP response is received, the discovery processing unit 22 determines that the IP address is used. When the ARP response is not received, the discovery processing unit 22 determines that the IP address is not used. The discovery processing unit 22 notifies the address use confirmation processing unit 21 of presence or absence of the ARP response as the confirmation result.

In the present example embodiment, the DHCP proxy server confirms the use state of the IP address by using ARP instead of ICMP as a communication protocol. Since a typical client terminal supports ARP required for normal communication, even when the client terminal sends no response to ICMP, the DHCP proxy server can confirm whether or not the IP address is used. Even when ICMP is not supported by a client terminal in a subnet to be discovered, the DHCP server refers to the confirmation result obtained by the DHCP proxy server, thereby preventing a duplicated allocation of the same IP address to a plurality of client terminals.

Note that the above example embodiments have been described in a case where the DHCP proxy server 20 locates to the subnet 50C or the subnet 50A. However, a program describing a procedure for executing the address duplication prevention method according to the present example embodiment may be installed in a computer including a server. In this case, the program is installed and is executed by the computer, which is already connected to a network, and thereby obtaining the same advantageous effects as those of the example embodiments described above.

While the present invention has been described above with reference to the example embodiments thereof, the present invention is not limited to the above example embodiments. The configuration and details of the present invention can be modified in various forms that can be understood by those skilled in the art within the scope of the present invention.

This application is based upon and claims the benefit of priority from Japanese patent application No. 2015-040088, filed on March 2, 2015, the disclosure of which is incorporated herein in its entirety by reference.

### [Reference signs List]

- 10: DHCP server
- 20: DHCP proxy server
- 21: Address use confirmation processing unit
- 22: Discovery processing unit

## Claims

1. An information processing system comprising:
a DHCP server (10) configured to transmit, upon receiving a request for address allocation from a client terminal (31, 32), a request message for requesting confirmation of a use state of a target address, to a second subnet being different from a first subnet to which the DHCP server is connected, and determine, upon receiving a response message including a confirmation result for the request message from the second subnet, whether or not to allocate the address to the client terminal, based on the confirmation result; said information processing system being **characterized by** further comprising:
a proxy server (20) connected to the second subnet and configured to send, upon receiving the request message from the DHCP server (10), an echo request for requesting a client terminal (31, 32) using the target address to send a reply, to a subnet to which the client terminal having requested the address allocation is connected, and transmit, to the DHCP server (10), the response message including presence or absence of a response to the echo request as the confirmation result.

2. A proxy server (20) comprising:
use confirmation processing means (21) for receiving, from a DHCP server (10) connected to a first subnet (50B) and receiving a request for address allocation from a client terminal (31, 32), a request message for requesting confirmation of a use state of a target address through a second subnet (50C) being different from the first subnet (50B), and returning a response message including a confirmation result to the request message, to the DHCP server (10); and said proxy server (20) being **characterized by** further comprising:
discovery processing means (22) for sending, when the use confirmation processing means receives the request message from the DHCP server, an echo request for requesting a client terminal (31, 32) using the target address to send a reply, to a subnet to which the client terminal (31, 32) having requested the address allocation is connected, and notifying the use confirmation processing means (21) of presence or absence of a response to the echo request as the confirmation result.

3. The proxy server (20) according to claim 2, wherein the echo request is either an ICMP, Internet Control Message Protocol, echo request or an ARP, Address Resolution Protocol, request.

4. The proxy server (20) according to claim 3, wherein, when the client terminal (31, 32) is connected to the second subnet, the discovery processing means uses the ARP request as the echo request.

5. An address duplication prevention method executed by a proxy server (20) connected to a subnet (50C) being different from a subnet (50B) to which a DHCP server (10) is connected, the address duplication preventing method being **characterized by** comprising:
sending, upon receiving a request message for requesting confirmation of a use state of a target address from the DHCP server (10) receiving a request for address allocation from a client terminal(31, 32), an echo request for requesting a client terminal using the target address to send a reply, to a subnet to which the client terminal having requested the address allocation is connected;
generating a response message including presence or absence of a response to the echo request as a confirmation result in response to the request message; and
returning the generated response message to the DHCP server (10).

6. A computer-readable recording medium **characterized by** storing a program for causing a computer connected to a subnet (50C) being different from a subnet (50B) to which a DHCP server (10) is connected, to execute:
a procedure of sending, upon receiving a request message for requesting confirmation of a use state of a target address from the DHCP server (10) receiving a request for address allocation from a client terminal (31, 32), an echo request for requesting a client terminal using the target address to send a reply, to a subnet to which the client terminal having requested the address allocation is connected;
a procedure of generating a response message including presence or absence of a response to the echo request as a confirmation result in response to the request message; and
a procedure of returning the generated response message to the DHCP server (10).

## Patentansprüche

1. Informationsverarbeitungssystem, umfassend:
einen DHCP-Server (10), der konfiguriert ist, um nach dem Empfangen einer Anforderung zur Adresszuweisung von einem Client-Endgerät (31, 32) eine Anforderungsnachricht zum Anfordern einer Bestätigung eines Nutzungszustands einer Zieladresse an ein zweites Subnetz zu senden, das sich von einem ersten Subnetz unterscheidet, mit dem der DHCP-Server verbunden ist, und nach dem Empfangen einer Antwortnachricht, die ein Bestätigungsergebnis für die Anforderungsnachricht von dem zweiten Subnetz enthält, zu bestimmen, ob die Adresse dem Client-Endgerät basierend auf dem Bestätigungsergebnis zugeordnet werden soll oder nicht; wobei das Informationsverarbeitungssystem **dadurch gekennzeichnet ist, dass** es ferner umfasst:
einen Proxy-Server (20), der mit dem zweiten Subnetz verbunden ist und konfiguriert ist, um nach dem Empfangen der Anforderungsnachricht vom DHCP-Server (10) eine Echoanforderung zu senden, um ein Client-Terminal (31, 32) unter Verwendung der Zieladresse aufzufordern, eine Antwort an ein Subnetz zu senden, mit dem das Client-Terminal, das die Adresszuweisung angefordert hat, verbunden ist, und die Antwortnachricht einschließlich des Vorhandenseins oder Fehlens einer Antwort auf die Echoanforderung als Bestätigungsergebnis an den DHCP-Server (10) zu übertragen.

2. Proxy-Server (20), umfassend:
Verwendungsbestätigungsverarbeitungsmittel (21) zum Empfangen einer Anforderungsnachricht zum Anfordern einer Bestätigung eines Verwendungszustands einer Zieladresse über ein zweites Subnetz (50C), das sich vom ersten Subnetz (50B) unterscheidet, von einem DHCP-Server (10), der mit einem ersten Subnetz (50B) verbunden ist und zum Empfangen einer Anforderungsnachricht mit einem Bestätigungsergebnis an den DHCP-Server (10); und wobei der Proxy-Server (20) ist **dadurch gekennzeichnet, dass** er ferner umfasst:
Erkennungs-Verarbeitungsmittel (22) zum Senden, wenn das Verwendungsbestätigungs-Verarbeitungsmittel die Anforderungsnachricht vom DHCP-Server empfängt, einer Echo-Anforderung zum Anfordern eines Client-Endgeräts (31, 32) unter Verwendung der Zieladresse zum Senden einer Antwort an ein Subnetz, mit dem das Client-Endgerät (31, 32), das die Adresszuweisung angefordert hat, verbunden ist, und zum Benachrichtigen des Verwendungsbestätigungs-Verarbeitungsmittels (21) über das Vorhandensein oder Fehlen einer Antwort auf die Echo-Anforderung als Bestätigungsergebnis.

3. Proxy-Server (20) nach Anspruch 2, wobei die Echoanforderung entweder eine ICMP-, Internet Control Message Protocol-, Echoanforderung oder eine ARP-, Address Resolution Protocol-, Anforderung ist.

4. Proxy-Server (20) nach Anspruch 3, wobei, wenn das Client-Terminal (31, 32) mit dem zweiten Subnetz verbunden ist, die Erkennungsverarbeitungsmittel die ARP-Anforderung als Echo-Anforderung verwendet.

5. Verfahren zur Verhinderung von Adressduplikaten, das von einem Proxy-Server (20) ausgeführt wird, der mit einem Subnetz (50C) verbunden ist, das sich von einem Subnetz (50B) unterscheidet, mit dem ein DHCP-Server (10) verbunden ist, **dadurch gekennzeichnet, dass** es Folgendes umfasst:
Senden, nach dem Empfangen einer Anforderungsnachricht zum Anfordern einer Bestätigung eines Verwendungszustands einer Zieladresse vom DHCP-Server (10), der eine Anforderung zur Adresszuweisung von einem Client-Endgerät (31, 32) empfängt, einer Echoanforderung zum Anfordern eines Client-Endgeräts unter Verwendung der Zieladresse zum Senden einer Antwort an ein Subnetz, mit dem das Client-Endgerät, das die Adresszuweisung angefordert hat, verbunden ist;
Erzeugen einer Antwortnachricht, die das Vorhandensein oder Fehlen einer Antwort auf die Echoanforderung als Bestätigungsergebnis als Antwort auf die Anforderungsnachricht beinhaltet; und
Zurückgeben der erzeugten Antwortnachricht an den DHCP-Server (10).

6. Computerlesbares Aufzeichnungsmedium, **gekennzeichnet durch** das Speichern eines Programms zum Veranlassen der Ausführung durch einen Computer, der mit einem Subnetz (50C) verbunden ist, das sich von einem Subnetz (50B) unterscheidet, mit dem ein DHCP-Server (10) verbunden ist:
eine Prozedur zum Senden, nach dem Empfangen einer Anforderungsnachricht zum Anfordern einer Bestätigung eines Verwendungszustands einer Zieladresse vom DHCP-Server (10), der eine Anforderung zur Adresszuweisung von einem Client-Endgerät (31, 32) empfängt, einer Echoanforderung zum Anfordern eines Client-Endgeräts unter Verwendung der Zieladresse zum Senden einer Antwort an ein Subnetz, mit dem das Client-Endgerät, das die Adresszuweisung angefordert hat, verbunden ist;
eine Prozedur zum Erzeugen einer Antwortnachricht, einschließlich des Vorhandenseins oder Fehlens einer Antwort auf die Echoanforderung als Bestätigungsergebnis als Antwort auf die Anforderungsnachricht; und
eine Prozedur zum Zurückgeben der erzeugten Antwortnachricht an den DHCP-Server (10).

## Revendications

1. Système de traitement d'informations comprenant :
un serveur DHCP (10) configuré pour transmettre, lors de la réception d'une demande d'allocation d'adresse en provenance d'un terminal client (31, 32), un message de demande pour demander confirmation d'un état d'utilisation d'une adresse cible, à un deuxième sous-réseau différent d'un premier sous-réseau auquel le serveur DHCP est connecté, et déterminer, lors de la réception d'un message de réponse comportant un résultat de confirmation pour le message de demande en provenance du deuxième sous-réseau, s'il faut allouer ou non l'adresse au terminal client, d'après le résultat de confirmation ; ledit système de traitement d'informations étant **caractérisé en ce qu'**il comprend en outre :
un serveur mandataire (20) connecté au deuxième sous-réseau et configuré pour envoyer, lors de la réception du message de demande en provenance du serveur DHCP (10), une demande d'écho pour demander à un terminal client (31, 32) utilisant l'adresse cible d'envoyer une réplique, à un sous-réseau auquel le terminal client ayant demandé l'allocation d'adresse est connecté, et transmettre, au serveur DHCP (10), le message de réponse comportant la présence ou l'absence d'une réponse à la demande d'écho en tant que résultat de confirmation.

2. Serveur mandataire (20) comprenant :
des moyens de traitement de confirmation d'utilisation (21) pour recevoir, en provenance d'un serveur DHCP (10) connecté à un premier sous-réseau (50B) et recevant une demande d'allocation d'adresse en provenance d'un terminal client (31, 32), un message de demande pour demander confirmation d'un état d'utilisation d'une adresse cible par le biais d'un deuxième sous-réseau (50C) différent du premier sous-réseau (50B), et renvoyer un message de réponse comportant un résultat de confirmation au message de demande, au serveur DHCP (10) ; et ledit serveur mandataire (20) étant **caractérisé en ce qu'**il comprend en outre :
des moyens de traitement de découverte (22) pour envoyer, lorsque les moyens de traitement de confirmation d'utilisation reçoivent le message de demande en provenance du serveur DHCP, une demande d'écho pour demander à un terminal client (31, 32) utilisant l'adresse cible d'envoyer une réplique, à un sous-réseau auquel le terminal client (31, 32) ayant demandé l'allocation d'adresse est connecté, et notifier les moyens de traitement de confirmation d'utilisation (21) de la présence ou de l'absence d'une réponse à la demande d'écho en tant que résultat de confirmation.

3. Serveur mandataire (20) selon la revendication 2, dans lequel la demande d'écho est soit une demande d'écho de protocole de message de commande Internet, ICMP, soit une demande de protocole de résolution d'adresse, ARP.

4. Serveur mandataire (20) selon la revendication 3, dans lequel, lorsque le terminal client (31, 32) est connecté au deuxième sous-réseau, les moyens de traitement de découverte utilisent la demande ARP en tant que demande d'écho.

5. Procédé de prévention de duplication d'adresse exécuté par un serveur mandataire (20) connecté à un sous-réseau (50C) différent d'un sous-réseau (50B) auquel un serveur DHCP (10) est connecté, le procédé de prévention de duplication d'adresse étant **caractérisé en ce qu'**il comprend :
l'envoi, lors de la réception d'un message de demande pour demander confirmation d'un état d'utilisation d'une adresse cible en provenance du serveur DHCP (10) recevant une demande d'allocation d'adresse en provenance d'un terminal client (31, 32), d'une demande d'écho pour demander à un terminal client utilisant l'adresse cible d'envoyer une réplique, à un sous-réseau auquel le terminal client ayant demandé l'allocation d'adresse est connecté ;
la génération d'un message de réponse comportant la présence ou l'absence d'une réponse à la demande d'écho en tant que résultat de confirmation en réponse au message de demande ; et
le renvoi du message de réponse généré au serveur DHCP (10).

6. Support d'enregistrement lisible par ordinateur **caractérisé en ce qu'**il stocke un programme pour amener un ordinateur connecté à un sous-réseau (50C) différent d'un sous-réseau (50B) auquel un serveur DHCP (10) est connecté, à exécuter :
une procédure d'envoi, lors de la réception d'un message de demande pour demander confirmation d'un état d'utilisation d'une adresse cible en provenance du serveur DHCP (10) recevant une demande d'allocation d'adresse en provenance d'un terminal client (31, 32), d'une demande d'écho pour demander à un terminal client utilisant l'adresse cible d'envoyer une réplique, à un sous-réseau auquel le terminal client ayant demandé l'allocation d'adresse est connecté ;
une procédure de génération d'un message de réponse comportant la présence ou l'absence d'une réponse à la demande d'écho en tant que résultat de confirmation en réponse au message de demande ; et
une procédure de renvoi du message de réponse généré au serveur DHCP (10).
